(19) Europäisches Patentamt
European Patent Office
Office européen des brevets

(11) Numéro de publication: 0 224 417 B1

# (12) FASCICULE DE BREVET EUROPEEN

(45) Date de publication du fascicule du brevet: 03.01.90

(51) Int. Cl.⁴: **C07F 9/40**, C07F 9/53

(21) Numéro de dépôt: 86402577.0

(22) Date de dépôt: 20.11.86

(54) **Procédé de préparation de dérivés fluorés de l'acide phosphonique.**

(30) Priorité: **20.11.85 FR 8517145**

(43) Date de publication de la demande:
**03.06.87 Bulletin 87/23**

(45) Mention de la délivrance du brevet:
**03.01.90 Bulletin 90/1**

(84) Etats contractants désignés:
**CH DE GB IT LI NL**

(56) Documents cités:
**EP-A- 50 534**

**JOURNAL OF CHEMICAL RESEARCH, 1985, pages 92-93; G.M. BLACKBURN et al.: "A novel synthesis of fluorinated phosphonoacetic acids"**
**IDEM**
**CHEMICAL ABSTRACTS, vol. 74, no. 23, 7 juin 1971, page 402, résumé no. 124736s, Columbus, Ohio, US; A.V. FOKIN et al.: "Reactions of fluorochloroacetic acid derivatives with nucleophilic reagents", & ZH. ORG. KHIM. 1971, 7(2), 249-51**
**IDEM**
**JOURNAL OF MEDICINAL CHEMISTRY, vol. 23, no. 10, octobre 1980, pages 1077-1083, American Chemical Society; P.A. GRIECO et al.:**

(73) Titulaire: **ROUSSEL-UCLAF, 35, boulevard des Invalides, F-75007 Paris(FR)**

(72) Inventeur: **Tessier, Jean, 30, rue Jean Moulin, F-94300 Vincennes(FR)**
Inventeur: **Demoute, Jean-Pierre, 249bis, rue de Rosny, F-93100 Montreuil(FR)**
Inventeur: **Truong, Van Thuong, 9ter, rue du Docteur Laennec, F-93370 Montfermeil(FR)**

(74) Mandataire: **Tonnellier, Marie-José, Département des Brevets ROUSSEL UCLAF B.P. no 9, F-93230 Romainville(FR)**

(56) Documents cités: (suite)
**"C(14)-Fluorinated prostaglandins: Synthesis and biological evaluation of the methyl esters of (+)-14-fluoro-, (+)-15-epi-14-fluoro-, (+)-13(E)-14-fluoro-, and (+)-13(E)-15-epi-14-fluoroprostaglandin F2alpha" 000**
**IDEM**
**T 163/84 (E.P.A. 80100882.2)**

EP 0 224 417 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation de dérivés fluorés de l'acide phosphorique.

On connaissait déjà plusieurs procédés de préparation de dérivés fluorés de l'acide phosphorique décrits par exemple dans J. Med. Chem. 1980, 23, 1077–1083, dans CA. 74, 1971, 124736, dans J. Chem. Research (5) 1985 p 92–93, dans EP-A 50 534. On vient de découvrir un nouveau procédé de préparation de dérivés fluorés de l'acide phosphorique utilisant comme réactif le fluor.

L'invention a pour objet un procédé de préparation des composés de formule I:

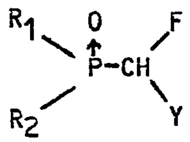

(I)

dans laquelle $R_1$, et $R_2$, identiques ou différents, représentent un radical aryle renfermant de 6 à 14 atomes de carbone, un radical alcoyle, linéaire ou ramifié, saturé ou insaturé, renfermant jusqu'à 8 atomes de carbone, un radical aralkyle renfermant jusqu'à 18 atomes de carbone, un radical aryloxy renfermant de 6 à 14 atomes de carbone, un radical alcoyloxy, linéaire ou ramifié, saturé ou insaturé renfermant jusqu'à 8 atomes de carbone ou un radical aralkyloxy renfermant jusqu'à 18 atomes de carbone, $R_1$ et $R_2$ pouvant former un cycle entre eux et le phosphore et Y représente un radical $-CO_2R_3$, $R_3$ représentant un radical alcoyle, linéaire ou ramifié, éventuellement substitué, saturé ou insaturé pouvant renfermer jusqu'à 8 atomes de carbone, un radical –CN, un radical:

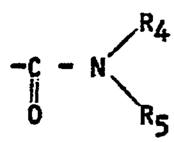

$R_4$ et $R_5$, identiques ou différents, représentant un atome d'hydrogène, un radical alcoyle, linéaire ou ramifié, saturé ou insaturé, renfermant jusqu'à 8 atomes de carbone ou un radical aryle renfermant jusqu'à 14 atomes de carbone, un radical

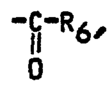, $R_6$

représentant un radical alcoyle, linéaire ou ramifié, saturé ou insaturé ou cyclique renfermant jusqu'à 10 atomes de carbone ou un radical aryle renfermant jusqu'à 14 atomes de carbone, caractérisé en ce que l'on soumet un composé de formule II :

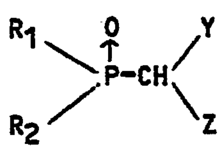

(II)

dans laquelle Z représente un radical CHO ou un radical

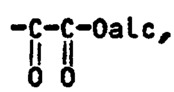,

alc représentant un radical alcoyle, linéaire ou ramifié, saturé ou insaturé renfermant jusqu'à 8 atomes de carbone, $R_1$, $R_2$ et Y conservant la même signification que précédemment, à l'action du fluor, pour obtenir le composé de formule I correspondant.

Lorsque $R_1$ et $R_2$ représentent un radical aryle, il s'agit de préférence du radical phényle.

Lorsque $R_1$ et $R_2$ représentent un radical alcoyle, il s'agit de préférence d'un radical méthyle, éthyle, n-propyle, isopropyle, n-butyle, sec-butyle, isobutyle, n-pentyle, n-hexyle, tert-butyle.

Lorsque $R_1$ et $R_2$ représentent un radical aralkyle, il s'agit de préférence du radical benzyle ou du radical phénéthyle.

Lorsque $R_1$ et $R_2$ représentent un radical aryloxy, il s'agit de préférence du radical phénoxy.

Lorsque $R_1$ et $R_2$ représentent un radical alcoyloxy, il s'agit de préférence du radical méthoxy, éthoxy, n-propoxy, isopropoxy, n-butoxy, sec-butoxy, isobutoxy, t-butoxy.

Lorsque $R_1$ et $R_2$ représentent un radical aralkyloxy, il s'agit de préférence du radical benzoxy ou phénéthoxy.

Lorsque $R_1$ et $R_2$ forment un cycle avec le phosphore, $R_1$ et $R_2$ représentent de préférence un radical 1,2-diméthyl éthylènedioxy, 1,1,2,2-tétraméthyl éthylènedioxy, propylène 1,3-dioxy ou 2,2-diméthyl propylène 1,3-dioxy.

$R_3$ et alc représentent de préférence un radical méthyle, éthyle, n-propyle, isopropyle, n-butyle, sec-butyle, isobutyle, n-pentyle ou tert-butyle.

Lorsque $R_4$ et $R_5$ représentent un radical alcoyle ; il s'agit de préférence du radical méthyle, éthyle, n-propyle, isopropyle, n-butyle.

Lorsque $R_4$ et $R_5$ représentent un radical aryle, il s'agit de préférence du radical phényle.

Lorsque $R_6$ représente un radical alcoyle, il s'agit de préférence de méthyle, éthyle, n-propyle, isopropyle, n-butyle, sec-butyle, tert-butyle, n-pentyle, n-hexyle, cyclopropyle, cyclobutyle, cyclopentyle, cyclohexyle. Lorsque $R_6$ représente un radical aryle, il s'agit de préférence de phényle.

Certains composés de formule I sont nouveaux. L'un de ces produits, à savoir l'(0,0-diéthylphosphono) 2-fluoro 2-acétate d'éthyle est connu, il peut être préparé selon le procédé décrit par Grell et Machleidt dans Liebigs Ann. Chem. 693 (1965) p. 141 par action du fluorure de perchloryle sur l'énolate de potassium du diéthyl phosphono oxalacétate de diéthyle dans l'alcool absolu à -10°C selon le schéma :

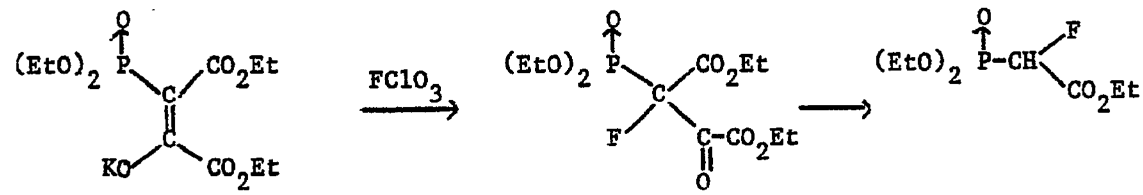


Le fluorure de perchloryle est un réactif intéressant pour fluorer des composés à hydrogène mobile, toutefois son utilisation entraîne des risques d'explosions violentes. De ce fait, le fluorure de perchloryle ne peut être utilisé dans la préparation industrielle de produits chimiques.

Il était donc souhaitable de pouvoir disposer d'un procédé de préparation évitant l'utilisation de ce réactif.

On vient de découvrir qu'il était possible d'utiliser le fluor à la place du fluorure de perchloryle pour préparer l'(O,O-diéthyl phosphono) 2-fluoro 2-acétate d'éthyle avec de très bons rendements. De plus, l'utilisation du fluor n'entraîne pas de risques d'explosions comme le fait le fluorure de perchloryle et de ce fait le procédé de l'invention est un procédé industriel.

Le procédé de l'invention est tout à fait étonnant ; compte tenu de l'extrême réactivité du fluor, on pouvait s'attendre à obtenir, non pas le dérivé monofluoré

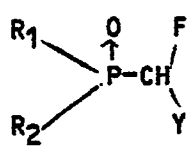

(I)

mais le dérivé difluoré :

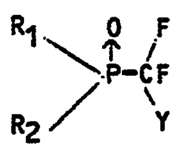

On pouvait également s'attendre à ce que le fluor provoque des réactions secondaires au niveau de $R_1$ et $R_2$.

Le procédé de l'invention qui permet l'utilisation du fluor sur les produits de formule II qui sont eux-mêmes des produits très réactifs, est donc tout à fait inattendu et présente l'avantage de pouvoir être industrialisé (puisqu'il n'entraîne pas de risques d'explosions).

L'invention a notamment pour objet un procédé, caractérisé en ce que l'on soumet le composé de formule II à l'action du fluor, en présence d'un agent basique pour obtenir le composé de formule I correspondant.

Comme agent basique, on peut citer la soude, la potasse, les carbonates et les hydrogèno-carbonates alcalins et alcalino-terreux.

Dans un mode de réalisation préféré du procédé de l'invention, on utilise pour la fluoration un courant de fluor dilué entre 5 et 20 % dans un gaz inerte comme l'azote.

Les composés de formule II sont connus d'une façon générale, les composés de formule II dans lesquels Z représente un radical CHO peuvent être préparés selon le procédé suivant :

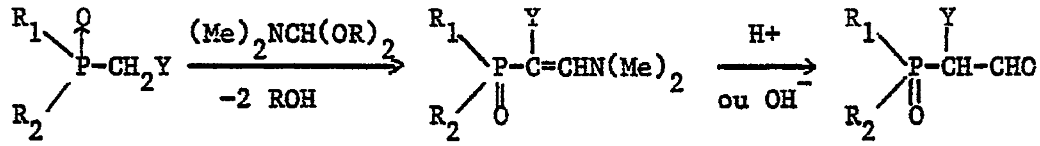


avec $Y = CO_2R_3$, $CON<^{R_4}_{R_5}$, $CO-R_6$, CN

La partie expérimentale exposée ci-après décrit la préparation d'un composé de formule II dans lequel $R_1 = R_2 = OC_2H_5$,

$$Y = CO_2C_2H_5 \text{ et } Z = -\underset{\underset{O}{\|}}{C}-CO_2C_2H_5.$$

De nombreux composés de formule II sont décrits également par S.T.Yoffe et Coll. dans Tetrahedron Vol. 28, 1972, pp. 2783 à 2798. D'autres références sont fournies dans la partie expérimentale.

L'invention a plus particulièrement pour objet un procédé de préparation, caractérisé en ce que l'on soumet à l'action du fluor au sein d'un milieu aqueux légèrement basique, un composé de formule II dans laquelle Z=CHO ou la forme salifiée correspondante, pour obtenir le composé de formule I correspondant et également un procédé, caractérisé en ce que l'on opère en présence d'acétonitrile.

L'invention a tout spécialement pour objet un procédé, caractérisé en ce que l'on soumet un composé de formule $II'_A$ ou la forme salifiée correspondante $II'_B$ :

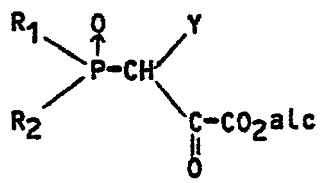

$(II'_A)$

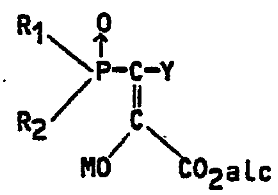

$(II'_B)$

dans laquelle M représente un métal alcalin ou alcalino-terreux, $R_1$, $R_2$, Y et alc conservant la même signification que précédemment, à l'action du fluor en opérant au sein d'un solvant organique compatible avec le fluor, puis soumet le produit obtenu à l'action d'une solution aqueuse basique pour obtenir le composé de formule I correspondant.

Comme métal alcalin, on peut citer le sodium ou le potassium.

L'invention a aussi tout spécialement pour objet un procédé, caractérisé en ce que l'on soumet un composé de formule $II'_A$ ou $II'_B$, $II'_A$ et $II'_B$ étant définis comme précédemment, à l'action du fluor en opérant au sein d'une solution aqueuse basique, pour obtenir le composé de formule I correspondant.

L'invention a plus particulièrement pour objet un procédé caractérisé en ce que $R_1$ et $R_2$ représentent chacun un radical alcoyloxy linéaire renfermant de 1 à 4 atomes de carbone, un procédé caractérisé en ce que Y représente un radical $-CO_2R_3$, $R_3$ représentant un radical alcoyle linéaire ou ramifié, saturé ou insaturé, renfermant de 1 à 6 atomes de carbone, un procédé caractérisé en ce que Y représente un radical

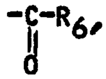, $R_6$ représentant un radical alcoyle linéaire ou ramifié, saturé ou insaturé, renfermant jusqu'à 6 atomes de carbone ou un radical aryle renfermant de 6 à 14 atomes de carbone, et enfin un procédé caractérisé en ce que Y représente un groupement cyano.

Les composés de formule I sont des produits chimiques intéressants, ils peuvent servir de produits intermédiaires dans la préparation de produits pesticides, par exemple comme il est indiqué dans le brevet européen 0 050 534 où l'on fait réagir selon la réaction de Wittig en présence d'une base forte, un aldéhyde cis sous forme de lactone de formule V :

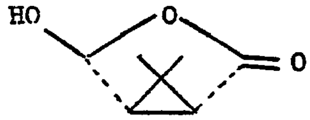 (V)

avec un phosphonate de formule VI

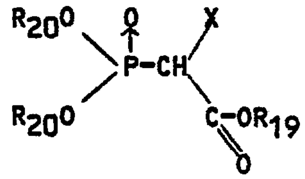 (VI)

dans laquelle $R_{19}$ et $R_{20}$ représentent un radical alcoyle et X représente un atome d'halogène pour obtenir un composé de formule :

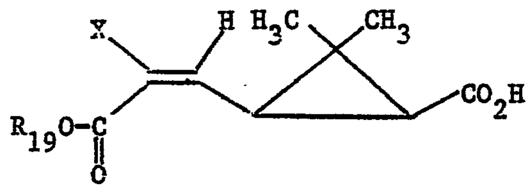

que l'on soumet à l'action d'un alcool BOH, B représentant le reste d'un alcool utilisé dans la synthèse des esters de la série pyréthrinoïde.

Les produits de formule I peuvent conduire par leur mise en oeuvre dans la réaction de Wittig à de très nombreux autres produits biologiquement actifs, ou intermédiaires de produits biologiquement actifs.

Les produits de formule I peuvent conduire notamment à des produits utilisables comme médicaments, ou encore comme produits pesticides, insecticides ou acaricides, destinés à lutter contre les parasites des végétaux ou des animaux.

Les exemples suivants illustrent l'invention sans toutefois la limiter.

**Exemple 1** : (O,O-diéthylphosphono) 2-fluoro 2-acétate d'éthyle.

**Préparation dans un solvant organique.**

Dans une solution de 1,45 g de sel de potassium du 3-(O,O-diéthylphosphono) 1,4-diéthoxy 1,4-dioxo 2-buten 2-ol dans 15 cm3 de chlorofor-me et 10 cm3 de trichlorofluorométhane refroidie à -60° C, on fait passer un courant de fluor dilué à 10% dans l'azote. On abandonne pendant 1 heure à -60°C, rechauffe à 0°C sous azote pour chasser l'excès de fluor, ajoute une solution de bicarbonate de sodium et du thiosulfate de sodium agite, décante, extrait au chlorure de méthylène, concentre à sec par distillation, purifie le résidu par chromatographie sur silice en éluant avec un mélange d'hexane et d'acétate d'éthyle (1-1) et obtient 0,65 g de produit recherché, pur en C.C.M. Rf = 0,2.

**Exemple 2** : (O,O-diéthylphosphono) 2-fluoro 2-acétate d'éthyle.

**Préparation en milieu aqueux.**

On dissout 1,45 g de sel de potassium du 3-(O,O-diéthylphosphono) 1,4-diéthoxy 1,4-dioxo 2-buten 2-ol et 1,2 g de bicarbonate de potassium dans 20 cm3 d'eau refroidie à 0°/+2°C, fait barboter un courant

de fluor dilué à 10% dans l'azote jusqu'à absorption de la quantité nécessaire de fluor, effectue un balayage à l'azote pendant 1 heure à 0°C pour chasser l'excès de fluor, ajoute du thiosulfate de sodium, extrait au chlorure de méthylène, concentre à sec par distillation et obtient 0,94 g de produit recherché.

Le produit de départ des exemples 1 et 2 a été préparé comme suit : **Sel de potassium du 3-(O,O-diéthylphosphono) 1,4-diéthoxy 1,4-dioxo 2-buten 2-ol.**

A 6,7 g de potassium dans 100 cm3 d'éther éthylique, on ajoute 25,3 cm3 d'éthanol, porte au reflux pendant 4 heures, introduit en 10 minutes environ un mélange de 25 g d'oxalate d'éthyle et de 38,4 g d'(O,O-diéthylphosphono) acétate d'éthyle. On chauffe au reflux encore 2 heures, agite pendant 20 heures à 20°C, essore le précipité formé, le lave à l'éther éthylique et obtient 23,4 g de produit recherché. F = 160°C.

**Exemple 3** : (O,O-diéthyl phosphono) 2-fluoro 2-acétate d'éthyle.

On dissout 36 g de 2-(O,O-diéthyl phosphono) 3-hydroxy 2-propénoate d'éthyle préparé selon le procédé décrit par DAWSON et Coll., JACS 74, 5312 (1952) dans 720 cm3 d'eau contenant 43 g de bicarbonate de sodium, refroidit à +3°C, fait passer un courant de fluor à 10% dans de l'azote pendant 6 heures, chasse l'excès de fluor par un courant d'azote, réduit l'éventuel excès de fluor par addition de thiosulfate de sodium, extrait au chlorure de méthylène, concentre à sec par distillation sous pression réduite et obtient 25,6 g de produit recherché brut. On rectifie sous pression réduite 23 g de produit brut et obtient 16,5 g de produit recherché pur. Eb = 110°C sous 0,8 mm de mercure.

**Exemple 4** : Ester diméthylique de l'acide (1-fluoro 2-oxo propyl) phosphonique.

On refroidit à O°/+2°C sous agitation et atmosphère d'azote 25 g de /1-(hydroxyméthylène) 2-oxopropyl/ phosphonate de diméthyle, 500 cm3 d'eau et 32,7 g de carbonate acide de sodium. On fait barboter un courant de fluor à 10% dans l'azote pendant 5 heures. On chasse le fluor résiduel par un courant d'azote, ajoute du thiosulfate de sodium et laisse 16 heures à 0°C environ. On extrait au chloroforme, sèche, distille à sec sous pression réduite et obtient 15 g de produit que l'on chromatographie en éluant par le mélange hexane-acétate d'éthyle (1-1). On obtient 9,47 g de produit recherché. Rf = 0,27. ($CHCl_3$-acétone-hexane : 1-1-1).

**Exemple 5** : Ester diéthylique de l'acide /3,3-diméthyl 1-fluoro 2-oxo butyl/ phosphonique

On refroidit à 0°/+5°C sous azote une solution renfermant 3,17 g de /3,3-diméthyl 1-(hydroxyméthylène) 2-oxobutyl/ phosphonate de diéthyle, 60 cm3 d'eau et 4 g de carbonate acide de sodium. On fait barboter pendant 1 heure dans la solution sous bonne agitation un courant de fluor dilué à 10% dans l'azote. On arrête le courant de fluor et fait passer un courant d'azote pour chasser le fluor résiduel, et ajoute un peu de thiosulfate de sodium. On extrait au chlorure de méthylène, sèche, et distille sous pression réduite. On obtient 2,68 g de produit que l'on chromatographie sur silice en éluant par le mélange hexane-acétate d'éthyle (1-1). On obtient 0,42 g de produit recherché. Rf = 0,25.

**Exemple 6** : Ester diéthylique de l'acide (1-fluoro 2-oxophényléthyl) phosphonique.

On ajoute 6 g de carbonate acide de potassium dans une solution renfermant 6,1 g de (1-benzoyl 2-hydroxyéthényl) phosphonate de diéthyle 120 cm3 d'eau déminéralisée et 60 cm3 de cyanure de méthyle. On refroidit la solution obtenue à 0°/+2°C sous azote, et fait barboter un courant de fluor à 10% dans l'azote, pendant 1 heure environ. On arrête l'arrivée de fluor, fait passer pendant 30 minutes un courant d'azote, ajoute un peu de thiosulfate de sodium, extrait au chloroforme, sèche et distille à sec. On obtient un produit que l'on chromatographie sur silice en éluant par le mélange hexane-acétate d'éthyle (1-1). On isole ainsi 3,64 g de produit recherché. Rf = 0,50. ($CHCl_3$-acétone-hexane : 1-1-1).

**Exemple 7** : Ester diéthylique de l'acide fluoro cyano méthyl phosphonique.

On refroidit au bain de glace sous atmosphère d'azote sous agitation, à environ 3°C, une solution renfermant 40,5 g de sel de sodium de 3-cyano 2(O,O-diéthylphosphono) 1-propen 1-ol préparé comme indiqué par KIRILOV MONATSH 99, 166 (1960) et 800 cm3 d'eau. On ajoute 44,9 g de carbonate acide de sodium à 3°C. On fait barboter un courant de fluor à 10% d'azote. Au bout de 6 heures 50 minutes, on cesse l'introduction de fluor. On ajoute un peu de thiosulfate de sodium au mélange réactionnel qu'on extrait par la suite au chlorure de méthylène. On sèche et distille à sec sous pression réduite. On obtient 24,1 g de produit que l'on chromatographie sur silice en éluant par le mélange hexane-acétate d'éthyle (1-1). On obtient 21,0 g de produit recherché. Rf = 0,3.

## Revendications

1. Procédé de préparation des composés de formule I:

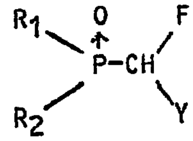

(I)

dans laquelle $R_1$ et $R_2$, identiques ou différents, représentent un radical aryle renfermant de 6 à 14 atomes de carbone, un radical alcoyle, linéaire ou ramifié, renfermant jusqu'à 8 atomes de carbone, un radical aralkyle renfermant jusqu'à 18 atomes de carbone, un radical aryloxy renfermant de 6 à 14 atomes de carbone, un radical alcoyloxy, linéaire ou ramifié, renfermant jusqu'à 8 atomes de carbone ou un radical aralkyloxy renfermant jusqu'à 18 atomes de carbone, $R_1$ et $R_2$ pouvant former entre eux et le phosphore un cycle 4,5-diméthyl 1,3,2-dioxaphospholane, un cycle 4,4,5,5-tétraméthyl 1,3,2-dioxaphospholane, un cycle 1,3,2-dioxaphosphorinne ou un cycle 5,5-diméthyl 1,3,2-dioxaphosphorinne, et Y représente un radical $-CO_2R_3$, $R_3$ représentant un radical alcoyle, linéaire ou ramifié, éventuellement substitué, pouvant renfermer jusqu'à 8 atomes de carbone, un radical –CN, un radical:

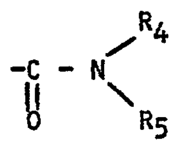

$R_4$ et $R_5$, identiques ou différents, représentant un atome d'hydrogène, un radical alcoyle, linéaire ou ramifié, renfermant jusqu'à 8 atomes de carbone ou un radical aryle renfermant jusqu'à 14 atomes de carbone, un radical

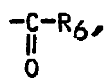, $R_6$

représentant un radical alcoyle, linéaire ou ramifié, ou cyclique renfermant jusqu'à 10 atomes de carbone ou un radical aryle renfermant jusqu'à 14 atomes de carbone, caractérisé en ce que l'on soumet un composé de formule II:

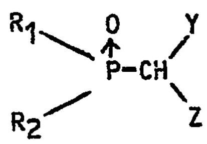

(II)

dans laquelle Z représente un radical –CHO ou un radical

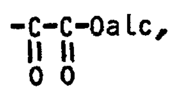

alc représentant un radical alcoyle, linéaire ou ramifié, renfermant jusqu'à 8 atomes de carbone, $R_1$, $R_2$ et Y conservant la même signification que précédemment, à l'action du fluor, pour obtenir le composé de formule I correspondant.

2. Procédé de préparation des composés de formule (I) selon la revendication 1, caractérisé en ce que l'on soumet le composé de formule (II) à l'action du fluor, en présence d'un agent basique pour obtenir le composé de formule (I) correspondant.

3. Procédé de préparation des composés de formule (I) selon la revendication 1, caractérisé en ce que l'on soumet à l'action du fluor au sein d'un milieu aqueux légèrement basique, un composé de formule (II) dans laquelle Z=CHO, ou la forme salifiée correspondant, pour obtenir le composé de formule (I) correspondant.

4. Procédé selon la revendication 3, caractérisé en ce que l'on opère en présence d'acétonitrile.

5. Procédé selon la revendication 1 ou 2, caractérisé en ce que l'on soumet un composé de formule ($II'_A$) ou la forme salifiée correspondante ($II'_B$):

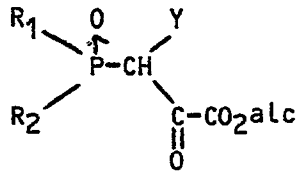

(II'A)

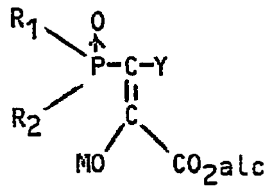

(II'B)

dans laquelle M représente un métal alcalin ou alcalino-terreux, $R_1$, $R_2$, Y et alc conservant la même signification que précédemment, à l'action du fluor en opérant au sein d'un solvant organique compatible avec le fluor, puis soumet le produit obtenu à l'action d'une solution aqueuse basique pour obtenir le composé de formule I correspondant.

6. Procédé selon la revendication 1 ou 2 caractérisé en ce que l'on soumet un composé ($II'_A$) ou ($II'_B$), ($II'_A$) et ($II'_B$) étant définis comme à la revendication 5, à l'action du fluor en opérant au sein d'une solution aqueuse basique pour obtenir le composé de formule (I) correspondant.

7. Procédé selon l'une quelconque des revendications 1 à 6, caractérisé en ce que $R_1$ et $R_2$ représentent chacun un radical alcoyloxy linéaire renfermant de 1 à 4 atomes de carbone.

8. Procédé selon l'une quelconque des revendications 1 à 7, caractérisé 5 en ce que Y représente un radical $-CO_2R_3$, $R_3$ représentant un radical alcoyle linéaire ou ramifié, renfermant de 1 à 6 atomes de carbone.

9. Procédé selon l'une quelconque des revendications 1 à 7, caractérisé en ce que Y représente un radical

$$-\underset{\displaystyle O}{\overset{}{\underset{\|}{C}}}-R_6,$$

$R_6$ représentant un radical alcoyle linéaire ou ramifié, renfermant jusqu'à 6 atomes de carbone ou un radical aryle renfermant de 6 à 14 atomes de carbone.

10. Procédé selon l'une quelconque des revendications 1 à 7, caractérisé en ce que Y représente un groupement cyano.

**Claims**

1. Process for the preparation of compounds of formula (I):

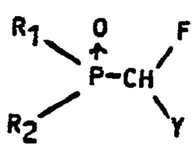

(I)

in which $R_1$ and $R_2$, identical or different, represent an aryl radical containing from 6 to 14 carbon atoms, a linear or branched alkyl radical containing up to 8 carbon atoms, an aralkyl radical containing up to 18 carbon atoms, an aryloxy radical containing from 6 to 14 carbon atoms, a linear or branched alkyloxy radical containing up to 8 carbon atoms, or an aralkyloxy radical containing up to 18 carbon atoms, $R_1$ and $R_2$ being able to form between themselves and the phosphorus, a 4,5-dimethyl 1,3,2-dioxaphospholane ring, a 4,4,5,5-tetramethyl 1,3,2-dioxaphospho-lane ring, a 1,3,2-dioxaphosphorin ring or a 5,5-dimethyl 1,3,2-dioxaphosphorin ring, and Y represents a $-CO_2R_3$ radical, $R_3$ representing a linear or branched alkyl radical, optionally substituted, which can contain up to 8 carbon atoms, a $-CN$ radical, a radical:

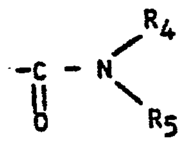

$R_4$ and $R_5$, identical or different, representing a hydrogen atom, a linear or branched alkyl radical containing up to 8 carbon atoms or an aryl radical containing up to 14 carbon atoms, a

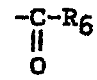

radical, $R_6$ representing a linear, branched or cyclic alkyl radical containing up to 10 carbon atomes or an aryl radical containing up to 14 carbon atoms, characterized in that a compound of formula II:

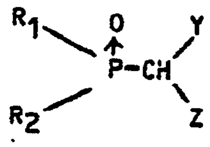

(II)

in which Z represents a CHO radical or a

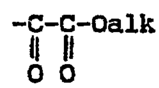

radical, alk representing a linear or branched alkyl radical containing up to 8 carbon atoms, $R_1$, $R_2$ and Y keeping the same meaning as previously, is submitted to the action of fluorino, so as to obtain the corresponding compound of formula (I).

2. Process for the preparation of compounds of formula (I) according to claim 1, characterized in that the compound of formula (II) is submitted to the action of fluorine, in the presence of a basic agent, so as to obtain the corresponding compound of formula (I).

3. Process for the preparation of compounds of formula (I) according to claim 1, characterized in that a compound of formula (II), in which Z=CHO, or the corresponding ossified form, is submitted to the action of fluorine in a slightly basic aqueous medium, so as to obtain the corresponding compound of formula (I).

4. Process according to claim 3, caracterized in that the operation is carried out in the presence of acetonitrile.

5. Process according to claim 1 or 2, characterized in that a compound of formula ($II'_A$), or the corresponding salified form ($II'_B$):

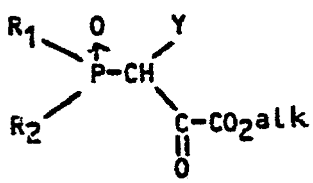

($II'_A$)

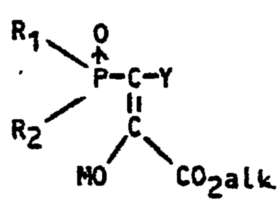

($II'_B$)

in which M represents an alkali or alkaline-earth metal, $R_1$, $R_2$, Y and alk keeping the same meaning as previously, is submitted to the action of fluorine, operating in an organic solvent which is compatible with fluorine, then the product obtained is submitted to the action of a basic aqueous solution so as to obtain the corresponding compound of formula (I).

6. Process according to claim 1 or 2, characterized in that a compound (II'A) or (II'B), (II'A) and II'B) being defined as in claim 5, is submitted to the action of fluorine, operating in a basic aqueous solution, so as to obtain the corresponding compound of formula (I).

7. Process according to any one of claims 1 to 6, characterized in that $R_1$ and $R_2$ each represents a linear alkyloxy radicall containing from 1 to 4 carbon atoms.

8. Process according to any one of claims 1 to 7, characterized in that Y represents a $-CO_2R_3$ radical, $R_3$ representing a linear or branched alkyl radical, containing from to 6 carbon atoms.

9. Process according to any one of claims 1 to 7, characterized in that Y represents a

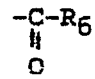

radical, $R_6$ representing a linear or branched o alkyl radical containing up to 6 carbon atoms or an aryl radical containing from 6 to 14 carbon atoms.

10. Process according to any one of claims 1 to 7, characterized in that Y represents a cyano group.

**Patentansprüche**

1. Verfahren zur Herstellung von Verbindungen der Formel I

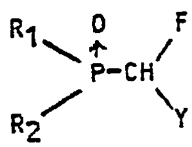

,(I)

worin $R_1$ und $R_2$, die gleich oder voneinander verschieden sein können, für einen Arylrest mit 6 bis 14 Kohlenstoffatomen, einen linearen oder verzweigten Alkylrest mit bis zu 8 Kohlenstoffatomen, einen Aralkylrest mit bis zu 18 Kohlenstoffatomen, einen Aryloxyrest mit 6 bis 14 Kohlenstoffatomen, einen linearen oder verzweigten Alkoxyrest mit bis zu 8 Kohlenstoffatomen oder einen Aralkoxyrest mit bis zu 18 Kohlenstoffatomen stehen, $R_1$ und $R_2$ gemeinsam mit dem Phosphor einen 4,5-Dimethyl-1,3,2-dioxaphospholan-Ring, einen 4,4,5,5,-Tetramethyl-1,3,2-dioxaphospholan-Ring, einen 1,3,2-Dioxaphosphorin-Ring oder einen 5,5-Dimethyl-1,3,2,dioxaphosphorin-Ring bilden können und Y einen Rest $-CO_2R_3$ wiedergibt, $R_3$ einen gegebenenfalls substituierten, linearen oder verzweigten Alkylrest mit bis zu 8 Kohlenstoffatomen, eine -CN-Gruppe, einen Rest

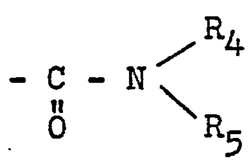

worin $R_4$ und $R_5$, die gleich oder voneinander verschieden sein können, für ein Wasserstoffatom, einen linearen oder verzweigten Alkylrest mit bis zu 8 Kohlenstoffatomen oder eine Arylgruppe mit bis zu 14 Kohlenstoffatomen stehen, einen Rest

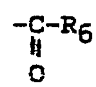

worin $R_6$ für einen linearen oder verzweigten oder cyclischen Alkylrest mit bis zu 10 Kohlenstoffatomen oder einen Arylrest mit bis zu 14 Kohlenstoffatomen steht, bedeutet, dadurch gekennzeichnet, daß man eine Verbindung der Formel II

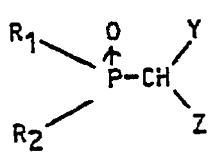

(II)

worin Z einen Rest -CHO oder einen Rest

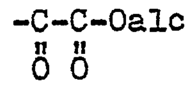

wiedergibt, worin alc für einen linearen oder verzweigten Alkylrest mit bis zu 8 Kohlenstoffatomen steht, $R_1$, $R_2$ und Y die vorstehend angegebene Bedeutung besitzen, der Einwirkung von Fluor unterzieht, um die entsprechende Verbindung der Formel I zu erhalten.

2. Verfahren zur Herstellung der Verbindungen der Formel (I) gemäß Anspruch 1, dadurch gekennzeichnet, daß man die Verbindung der Formel (II) der Einwirkung von Fluor in Gegenwart eines basischen Mittels unterzieht, um die entsprechende Verbindung der Formel (I) zu erhalten.

3. Verfahren zur Herstellung der Verbindungen der Formel (I) gemäß Anspruch 1, dadurch gekennzeichnet, daß man der Einwirkung von Fluor in dem Medium eines schwach basischen, wäßrigen Milieus eine Verbindung der Formel (II), worin Z=CHO, oder die entsprechende, in ein Salz übergeführte Form unterzieht, um die entsprechende Verbindung der Formel (I) zu erhalten.

4. Verfahren gemäß Anspruch 3, dadurch gekennzeichnet, daß man in Gegenwart von Acetonitril arbeitet.

5. Verfahren gemäß Anspruch 1 oder 2, dadurch gekennzeichnet, daß man eine Verbindung der Formel ($II'_A$) oder die entsprechende, in ein Salz übergeführte Form ($II'_B$)

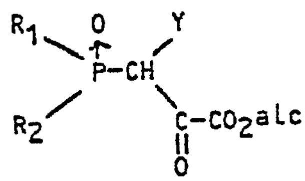

($II'_A$)

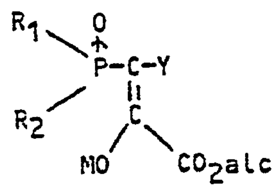

($II'_B$)

worin M für ein Alkali- oder Erdalkalimetall steht, $R_1$, $R_2$, Y und alc die vorstehend angegebene Bedeutung besitzen, der Einwirkung von Fluor unterzieht, wobei man in dem Medium eines mit Fluor verträglichen, organischen Lösungsmittels arbeitet, und hiernach das erhaltene Produkt der Einwirkung einer basischen, wäßrigen Lösung unterzieht, um zu der entsprechenden Verbindung der Formel (I) zu gelangen.

6. Verfahren gemäß Anspruch 1 oder 2, dadurch gekennzeichnet, daß man eine Verbindung ($II'_A$) oder ($II'_B$), wobei ($II'_A$) und ($II'_B$) wie in Anspruch 5 definiert sind, der Einwirkung von Fluor unterzieht, wobei man in dem Medium einer basischen, wäßrigen Lösung arbeitet, um zu der entsprechenden Verbindung der Formel (I) zu gelangen.

7. Verfahren gemäß einem der Ansprüche 1 bis 6, dadurch gekennzeichnet, daß $R_1$ und $R_2$ jeweils eine lineare Alkoxygruppe mit 1 bis 4 Kohlenstoffatomen wiedergeben.

8. Verfahren gemäß einem der Ansprüche 1 bis 7, dadurch gekennzeichnet, daß Y für einen Rest $-CO_2R_3$ steht, worin $R_3$ einen linearen oder verzweigten Alkylrest mit 1 bis 6 Kohlenstoffatomen bedeutet.

9. Verfahren gemäß einem der Ansprüche 1 bis 7, dadurch gekennzeichnet, daß Y für einen Rest

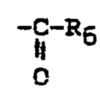

steht, worin $R_6$ einen linearen oder verzweigten Alkylrest mit bis zu 6 Kohlenstoffatomen oder einen Arylrest mit 6 bis 14 Kohlenstoffatomen bedeutet.

10. Verfahren gemäß einem der Ansprüche 1 bis 7, dadurch gekennzeichnet, daß Y eine Cyanogruppe bedeutet.